# EUROPEAN PATENT APPLICATION

(11) **EP 1 043 720 A1**
(43) Date of publication of application: **11.10.2000**
(21) Application number: 99201091.8
(22) Date of filing: 07.04.1999
(51) Int. Cl.: G11B 7/24, C09J 11/06

(54) **Heat mode recording element based on a thin metal layer**

(71) Applicant: AGFA-GEVAERT N.V., 2640 Mortsel (BE)
(72) Inventor: Lamotte, Johan c/o Agfa-Gevaert N.V., 2640 Mortsel (BE); D'hont, Dirk c/o Agfa-Gevaert N.V., 2640 Mortsel (BE); Loccufier, Johan c/o Agfa-Gevaert N.V., 2640 Mortsel (BE)

(57) **Abstract**

A heat mode element is disclosed comprising a support, a thin metal layer, an adhesive layer, and a protective polymeric resin layer. The adhesive layer contains an anti-oxidant.

## Description

### FIELD OF THE INVENTION

The present invention relates to a heat mode recording element based on a thin metal layer with improved stability on ageing.

### BACKGROUND OF THE INVENTION

In a particular type of heat mode recording materials information is recorded by creating differences in reflection and/or in transmission on the recording layer. The recording layer has high optical density and absorbs radiation beams which impinge thereon. The conversion of radiation into heat brings about a local temperature rise, causing a thermal change such as evaporation or ablation to take place in the recording layer. As a result, the irradiated parts of the recording layer are totally or partially removed, and a difference in optical density is formed between the irradiated parts and the unirradiated parts (cf. US Pat. Nos. 4,216,501, 4,233,626, 4,188,214 and 4,291,119 and British Pat. No. 2,026,346)

The recording layer of such heat mode recording materials is usually made of metals, dyes, or polymers. Recording materials like this are described in 'Electron, Ion and Laser Beam Technology", by M. L. Levene et al.; The Proceedings of the Eleventh Symposium (1969); "Electronics" (Mar. 18, 1968), P. 50; "The Bell System Technical Journal", by D. Maydan, Vol. 50 (1971), P. 1761; and "Science", by C. O. Carlson, Vol. 154 (1966), P. 1550.

Recording on such thermal recording materials is usually accomplished by converting the information to be recorded into electrical time series signals and scanning the recording material with a laser beam which is modulated in accordance with the signals. This method is advantageous in that recording images can be obtained on real time (i.e. instantaneously). Recording materials of this type are called "direct read after write" (DRAW) materials. DRAW recording materials can be used as a medium for recording an imagewise modulated laser beam to produce a human readable or machine readable record. Human readable records are e.g. micro-images that can be read on enlargement and projection. An example of a machine readable DRAW recording material is the optical disc. To date for the production of optical discs tellurium and its alloys have been used most widely to form highly reflective thin metal films wherein heating with laser beam locally reduces reflectivity by pit formation (ref. e.g. the periodical 'Physik in unserer Zeit', 15. Jahrg. 1984/Nr. 5, 129-130 the article "Optische Datenspeicher" by Jochen Fricke). Tellurium is toxic and has poor archival properties because of its sensitivity to oxygen and humidity. Other metals suited for use in DRAW heat-mode recording are given in US-P-4499178 and US-P-4388400. To avoid the toxicity problem other relatively low melting metals such as bismuth have been introduced in the production of a heat-mode recording layer. By exposing such a recording element with a high-power laser (pulsed or not) the writing spot ablates or melts a small amount of the bismuth layer. On melting the layer contracts on the heated spot by surface tension thus forming small cavitations or holes. As a result light can pass through these cavitations and the density is lowered to a certain Dmin value depending on the laser energy irradiated.

According to EP 0 384 041 a process is provided for the production of a heat mode recording material having "direct read after write" (DRAW) possibilities wherein a web support is provided with a heat mode recording thin metal layer, preferably a bismuth layer, characterized in that in the same vacuum environment a protective organic resin layer in web form is laminated to said supported recording layer by means of an adhesive layer.

A commercially available material manufactured according to the principles of cited EP 0 384 041 is MASTERTOOL MT8, registered trade name, marketed by Agfa-Gevaert N.V.. It is mostly used after recording as master in the manufacturing of microelectronic circuits and printed circuit boards. We refer to the description in Circuit World, Vol. 22, No. 3, April 1996. The material comprises a double-sided subbed polyethylene terephthalate (PET) support, carrying on one side a bismuth layer of about 0.25 µm thickness deposited in vacuo, a 8 µm thick weak adhesive layer, and a thin PET protective layer of 12 µm thickness. On the other side of the subbed PET support a backing layer is provided containing an antistatic and a matting agent. The matting agent prevents sticking to each other of packaged MASTERTOOL sheets, a phenomenon that is likely to lead to transport problems in exposure devices.

However, a MASTERTOOL material designed as described above shows following drawbacks. Probably due to partial oxidation of the bismuth the Dmin increases and the Dmax decreases on ageing.

### OBJECTS OF THE INVENTION

It is an object of the present invention to provide a heat mode recording element based on a thin metal layer with improved stability of Dmin and Dmax during shelf life.

### SUMMARY OF THE INVENTION

The above mentioned object is realized by providing a heat mode recording element comprising, in order,
(1) a transparent support,
(2) a thin metal recording layer,
(3) an adhesive layer,
(4) a polymeric resin layer,
characterized in that said adhesive layer (3) contains an anti-oxidant.

Preferably, the thin metallic recording layer is a bismuth layer applied by evaporation in vacuo.

In a most preferred embodiment the anti-oxidant is an ascorbic acid derivative, or a 2,5-dimercapto-1,3,4-thiadiazole.

### DETAILED DESCRIPTION OF THE INVENTION

The different elements constituting the heat mode recording material of the present invention will now be explained in more detail.

Useful transparent organic resin supports include e.g. cellulose nitrate film, cellulose acetate film, polyvinylacetal film, polystyrene film, polyethylene terephthalate film, polycarbonate film, polyvinylchloride film or poly-α-olefin films such as polyethylene or polypropylene film. The thickness of such organic resin film is preferably comprised between 0.07 and 0.35 mm. In a most preferred embodiment of the present invention the support is a polyethylene terephthalate layer provided with a subbing layer. This subbing layer can be applied before or after stretching of the polyester film support. The polyester film support is preferably biaxially stretched at an elevated temperature of e.g. 70-120°C, reducing its thickness by about 1/2 to 1/9 or more and increasing its area 2 to 9 times. The stretching may be accomplished in two stages, transversal and longitudinal in either order or simultaneously. The subbing layer is preferably applied by aqueous coating between the longitudinal and transversal stretch, in a thickness of 0.1 to 5 mm. In case of a bismuth recording layer the subbing layer preferably contains, as described in European Patent Application EP 0 464 906, a homopolymer or copolymer of a monomer comprising covalently bound chlorine. Examples of said homopolymers or copolymers suitable for use in the subbing layer are e.g. polyvinyl chloride, polyvinylidene chloride, a copolymer of vinylidene chloride, an acrylic ester and itaconic acid, a copolymer of vinyl chloride and vinylidene chloride, a copolymer of vinyl chloride and vinyl acetate, a copolymer of butylacrylate, vinyl acetate and vinyl chloride or vinylidene chloride, a copolymer of vinyl chloride, vinylidene chloride and itaconic acid, a copolymer of vinyl chloride, vinyl acetate and vinyl alcohol etc.. Polymers that are water dispersable are preferred since they allow aqueous coating of the subbing layer which is ecologically advantageous.

Possible metals for the recording layer in this invention include Mg, Sc, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Sn, As, Sb, Bi, Se, Te. These metals can be used alone or as a mixture or alloy of at least two metals thereof. Due to their low melting point Mg, Zn, In, Sn, Bi and Te are preferred. The most preferred metal for the practice of this invention is Bi.

The metal recording layer may be applied by vapor deposition, sputtering, ion plating, chemical vapor deposition, electrolytic plating, or electroless plating. In the preferred case of Bi the recording layer is preferably provided by vapour deposition in vacuo. A method and an apparatus for such a deposition are disclosed, in EP 0 384 041, cited above. In a more recent method disclosed in EP 0 875 889 the metal layer, preferably bismuth, is coated from an aqueous medium by conventional coating techniques after chemical reduction of a metal salt. However, in the most preferred embodiment of the present invention the metal layer, preferably bismuth, is applied by evaporation in vacuo.

The thickness of this Bi layer is preferably comprised between 0.1 and 0.6 mm. When this thickness is too low the recorded images do not have sufficient density. When on the other hand the thickness is too high the sensitivity tends to decrease and the minimal density, i.e. the density after laser recording on the exposed areas tends to be higher.

Since the metal layer is very sensitive to mechanical damage a protective element must be provided on top of the metallic layer. This protective element comprises a polymeric resin layer (4), acting as cover sheet, and an adhesive layer (3). A method for applying such a protective element by lamination in the same vacuum environment as wherein the deposition of the metal layer took place is also disclosed in EP 0 384 041, cited above. The cover sheet can be chosen from the group of polymeric resins usable for the support of the heat mode element. In a preferred embodiment the cover sheet is also polyethylene terephthalate but preferably substantially thinner than the polyethylene terephthalate of the support. The cover sheet may be provided with a subbing layer to improve the adhesion to the adhesive layer. On top of the cover sheet an extra antistatic layer may be coated optionally containing matting particles or spacing agents.

For the adherence of the hard protective outermost resin layer to the heat mode recording layer a layer (3) comprising a polymeric adhesive is used. Examples of such adhesive resins are described in US-P 4,033,770 for use in the production of adhesive transfers (decalcomanias) by the silver complex diffusion transfer process, in the Canadian Patent 728,607 and in the United States Patent 3,131,106. Furtheron, a survey of pressure and/or heat-sensitive adhesives is given by J. Shields in "Adhesives Handbook", 3rd. ed. (1984), Butterworths - London, Boston, and by Ernest W. Flick in "Handbook of Adhesive Raw Materials" (1982), Noyens Publications, Park Ridge, New Jersey - USA.

Pressure-sensitive adhesives are usually composed of (a) thermoplastic polymer(s) having some elasticity and tackiness at room temperature (about 20°C), which is controlled optionally with a plasticizer and/or tackifying resin. A thermoplastic polymer is completely plastic if there is no recovery on removal of stress and completely elastic if recovery is instantaneous and complete.

Particularly suitable pressure-sensitive adhesives are selected from the group of polyterpene resins, low density polyethylene, a copoly(ethylene/vinyl acetate), a poly(C₁-C₁₆)alkyl acrylate, a mixture of poly(C₁-C₁₆)alkyl acrylate with polyvinyl acetate, and copoly(vinylacetate-acrylate) being tacky at 20°C. For instance, particularly suitable pressure-sensitive adhesives are DUROTAK acrylate adhesives from National Starch & Chemical BV. Actual examples are :
- DUROTAK 380-2954 based on 2-ethylhexyl acrylate, butyl acrylate and acrylic acid ;
- DUROTAK 280-1151 based on ε-ethylhexyl acrylate, methyl acrylate, and hydroxyethyl acrylate.

The pressure-sensitive adhesive layer may contain crosslinking agents, so that after application of the layer a certain degree of crosslinking is observed. This can overcome bleeding of the adhesive. For example, DUROTAK 380-2954 contains Al-acetyl acetonate as crosslinking agents.

In the production of a pressure-adhesive layer an intrinsically non-tacky polymer may be tackified by the adding of a tackifying substance, e.g. plasticizer or other tackifying resin.

Examples of suitable tackifying resins are the terpene tackifying resins described in the periodical "Adhesives Age", Vol. 31, No. 12, November 1988, p. 28-29.

According to another embodiment the protective element is laminated or adhered to the heat-mode recording layer by means of a heat-sensitive also called heat-activatable adhesive layer or thermoadhesive layer, examples of which are described also in US-P 4,033,770. In such embodiment the laminating material consisting of adhesive layer and protective resin layer are heated in their contacting area to a temperature beyond the softening point of the adhesive. Heat may be supplied by electrical energy to at least one of the rollers between which the laminate is formed or it may be supplied by means of infra-red radiation. The laminating may proceed likewise by heat generated by high-frequency micro-waves as described e.g. in published EP-A 0 278 818 directed to a method for applying a plastic covering layer to documents.

It is the essence of the present invention that in the composition of the adhesive layer an anti-oxidant is incorporated. This anti-oxidant is preferably present in an amount of 0.001 g/m² to 1 g/m² and most preferably from 0.005 g/m² to 0.4 g/m². Combinations of different anti-oxidants may be used since synergical effects are possible. Suitable classes of anti-oxidants include, but are not limited to, ascorbic acid and derivatives, reductic acid, hypophosphorous acid, gallic acid esters, bisphenol derivatives, tocopherol, mercapto-substituted heterocyclic compounds such as thiopyrazole derivatives, and commercially available stabilizers, such as IRGANOX 1010 (registered trademark of Ciba-Geigy Co.) and ULTRANOX 626 (registered trademark of General Electric Co.)

In a preferred embodiment of the present invention the anti-oxidant is an ascorbic acid derivative. The most preferred ascorbic acid derivatives are following compounds :

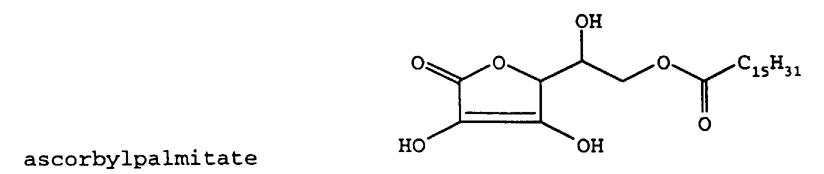

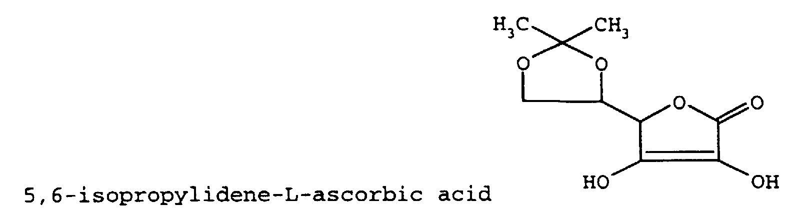

The synthesis of the latter compound is disclosed in J. Am. *Chem. Soc.* Vol. 102, No. 20, 1980, p.6308, and in *J. Org. Chem.* Vol. 50, No. 19, 1985, p. 3465.

Other preferred classes of compounds capable of functioning as anti-oxidants for metal particles, particularly bismuth particles, are aliphatic mercaptanes, and mercapto-substituted N-containing heterocyclic compounds such as mercapto-tetrazoles, mercaptotriazoles, mercapto-triazines, thiosemicarbazones, mercapto-oxodiazoles, and mercapto-benzthiazoles. The most preferred heterocyclic compounds however are derivatives of 2,5-dimercapto-1,3,4-thiadiazole with following general formula (a) : 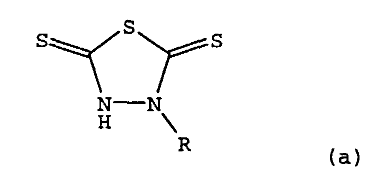 wherein R represents hydrogen, unsubstituted or substituted alkyl, or unsubstituted or substituted aryl.

The most preferred example is 2,5-dimercapto-1,3,4-thiadiazole itself (R = hydrogen) having following tautomeric strutures:
(b) and (b'):

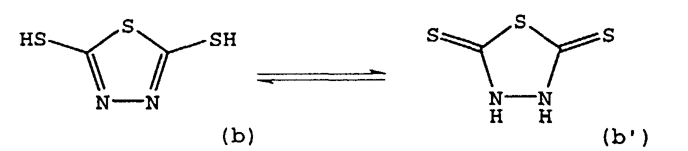

This compound is known in scientific literature as bismuthiol I, a reagent for bismuth ions in analytical chemistry.

It is believed that these compounds function as anti-oxidants by means of complexation followed by passivation. Without willing to be bound by theory a possible mechanism is as follows. Soon after coating a very thin outer shell of the bismuth particle is oxidized. Due to its high affinity for bismuth ions the thiol compound migrates from the adhesive layer to the bismuth layer and surrounds the particle by complexation in this way prohibiting further oxidation.

Other useful derivatives include following compounds :

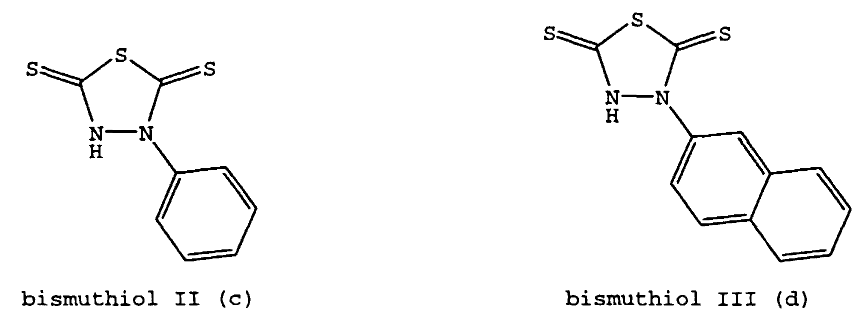

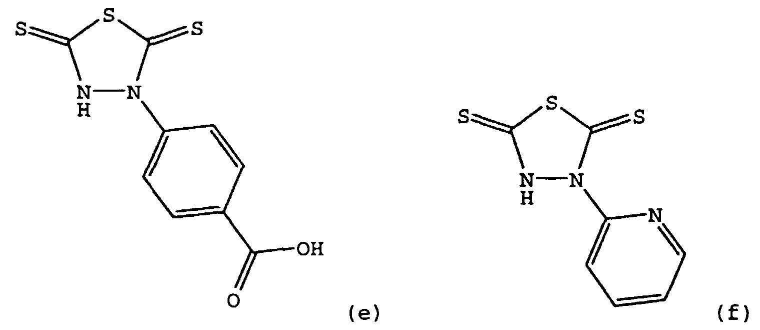

The heat mode element in accordance with the present invention can comprise an extra layer containing spacing agents applied on top of the polymeric resin layer (4). Such an element is disclosed in European patent application, appl. No. 97201820.

Furtheron, the heat mode element according to the present invention can comprise one or two antistatic layers, applied underneath the support (1), or on top of layer (4), or in both positions as disclosed in EP 0 886 268.

For the formation of a heat mode image using the element of the present invention any laser can be used which provides enough energy needed for the production of sufficient heat for this particular process of image formation. In a preferred embodiment a powerful infra-red laser is used, most preferably a Nd-YLF laser.

The present invention will now be illustrated by the following example without however being limited thereto.

### EXAMPLES

### Example I

### - Preparation of protective laminates

- Onto a 63 µm thick PET (layer (4)) was coated a pressure sensitive adhesive layer (3). The dry coating weight of the pressure sensitive layer was ±8g/m². The pressure sensitive adhesive coating solution contained:
- DUROTAK 280-1151 (National Starch & Chemical B.V.) resin solution containing an acrylate based polymer
- crosslinker Al-acetylacetonate
- wetting agent TEGOGLIDE 410 (registered trademark of Goldschmidt)
- ethyl acetate and ethanol as diluting solvents
- an anti-oxidant as described in the following table 1. The comparative examples comp.-1 and comp.-2 (both with identical composition) contained no anti-oxidant in the adhesive layer (3).

- A 23µm thick releasable temporary support (4SLK Mitsibushi; siliconised PET) was laminated under pressure against the pressure sensitive adhesive layer (3) with the siliconised side in contact with the adhesive layer.

**TABLE 1**

| sample No. | anti-oxidant | | | |
|---|---|---|---|---|
| | type | presolution | amount (%g/g *) | g/m² |
| comp.-1 | / | / | / | / |
| comp.-2 | / | / | / | / |
| I-1 | ascorbylpalmitate | 5% in methyl ethyl ketone/methanol 80/20 | 2 | 0.16 |
| 1-2 | propylgallate | 5% in methylethylketone | 2 | 0.16 |
| 1-3 | L-ascorbic acid | 5% in ethanol/water 80/20 | 2 | 0.16 |
| I-4 | 2,5-dimercapto-1,3,4-thiadiazole | 5% in methylethylketone | 2 | 0.16 |

| | | | | |
|---|---|---|---|---|
| * %g/g is percentual by weight of anti-oxidant relative to the amount of the adhesive polymer | | | | |

### - preparation of the bismuth film sales

The application of a bismuth layer by vacuum deposition onto a PET support and of a protective laminate consisting of an adhesive layer (3) and of a PET protective layer (4) were performed according to the process described in EP 0 384 041, cited above. A cylindrical vacuum chamber contained an electrically heated refractory tray in which bismuth is present as metal vapour source. Under high vacuum (a pressure in the range of 10⁻² Pa to 8x10⁻¹ Pa) the obtained bismuth vapour was directed towards a web made of polyethylene terephthalate having a thickness of 175 µm and being provided with a subbing layer comprising 79% by weight of co(vinylidene chloride-methylacrylate-itaconic acid; 88/10/2), 19% by weight of colloidal silica KIESELSOL 100F (registered trademark of Bayer AG), and 2% by weight of wetting agents. The bismuth layer was deposited at a thickness of about 300 nm. The web was supplied by an unwinding roll and was conveyed over a guiding roller against a cooled support roller. After passing the zone of the metal vapour deposition the web traveled upwardly to meet the laminating web (composition see above). By a mechanism explained in the cited patent the releasable layer was first peeled off, and the layers (3) and (4) were laminated by means of pressure rollers to the deposited bismuth layer.

A second subbing layer comprising 79% by weight of co(vinylidene chloride-methylacrylate-itaconic acid; 88/10/2), 19% by weight of colloidal silica KIESELSOL 100F, and 2% by weight of wetting agents, was applied at the exterior side of the PET support. Thereupon an antistatic backing layer was coated containing following ingredients :
- antistatic complex polyethylenedioxythiophene/polystyrene sulphonic acid;
- binder polymethylmethacrylate latex (0.15-0.4 µm);
- thickener polysaccharide KELZAN S (trademark of Kelco Co.);
- polyethylene latex (0.2 µm) PERAPRET PE40 (tradename of BASF AG);
- wetting agent ULTRAVON W (tradename of Ciba-Geigy AG).

### - results

The stability results were expressed as percentual change in maximum density Dmax (%ΔD) after conservation at room temperature, after three days conservation at 35°C/80% relative humidity (RH), and after three days conservation at 57°C/34% RH respectively. A negative value of %ΔD means a decrease in density. The density was measured with a Macbeth densitometer in the visual region. The results are summarised in table 2.

**TABLE 2**

| sample No | stability (%ΔD*) | | |
|---|---|---|---|
| | 6 days room temperature | 3 days 35°C/80% RH | 3 days 57°C/34% RH |
| comp.-1 | -6,1 | -6,8 | -10,3 |
| comp.-2 | -6,7 | -8,1 | -10,7 |
| I-1 | -1,3 | -1,7 | -1,4 |
| I-2 | -3,6 | -5,1 | -7,3 |
| I-3 | -1,3 | -7,1 | -3,3 |
| I-4 | +1,2 | +0,9 | +1,8 |

It is clear from table 2 that the samples having an anti-oxidant in their adhesive layer (3) according to the invention show an improved stability compared to the samples without anti-oxidant.

### Example II

### - Preparation of protective laminates

- Onto the siliconised side of a 23 µm thick releasable temporary support (4SLK Mitsibushi; siliconised PET) was coated a pressure sensitive adhesive layer (3). The dry coating weight of the pressure sensitive layer was ±8g/m². The pressure sensitive adhesive coating solution contained:
- DUROTAK 380-2954 (National Starch & Chemical B.V.), a self-crosslinking, acrylic based pressure sensitive adhesive,
- wetting agent TEGOGLIDE 410 (tradename of Goldschmidt),
- ethyl acetate and ethanol as diluting solvents,
- an anti-oxidant as described in the following table 3. In the comparative examples 3 and 4 (both with identical composition) no anti-oxidant was present in the adhesive layer (3).

- A 63 µm thick PET (layer (4)) was laminated against the pressure sensitive adhesive layer (3).

**TABLE 3**

| sample No | anti-oxidant | | | |
|---|---|---|---|---|
| | Type | Presolution | amount (%g/g *) | g/m² |
| comp.-3 | / | / | / | / |
| comp.-4 | / | / | / | / |
| II-1 | 2,5-dimercapto-1,3,4-thiadiazole | / | 0,2 | 0.02 |
| II-2 | 2,5-dimercapto-1,3,4-thiadiazole | / | 0,5 | 0.06 |
| II-3 | 2,5-dimercapto-1,3,4-thiadiazole | / | 1 | 0.12 |
| II-4 | 2,5-dimercapto-1,3,4-thiadiazole | / | 2 | 0.22 |
| II-5 | 5,6 isopropylidene-L-ascorbic acid | 2,5% in ethylacetate/ethanol 80/20 | 2 | 0.22 |

| | | | | |
|---|---|---|---|---|
| * %g/g is percentual by weight of anti-oxidant relative to the amount of the adhesive polymer | | | | |

### - preparation of the bismuth film samples

The application of a bismuth layer by vacuum deposition onto a PET support was identical to the previous example with the exception that the subbing layer contained 69,5% by weight of co(vinylidene chloride-methylacrylate-itaconic acid; 88/10/2) and 28,5% by weight of colloidal silica KIESELSOL 100F (registered trademark of Bayer AG), and 2% by weight of wetting agents.

A second subbing layer and antistatic backing layer were applied as in example I.

### - results

### Dmax change

The stability results were expressed as percentual change in maximum density Dmax (%ΔD) after conservation at room temperature, after three days conservation at 35°C/80% relative humidity (RH), and after three days conservation at 57°C/34% RH respectively. A negative value of %ΔD means a decrease in density. The density was measured with a Macbeth densitometer in the visual region. The results are summarised in table 4.

**TABLE 4**

| sample No | stability (%ΔD*) | | | | |
|---|---|---|---|---|---|
| | room temperature | | | 35°C/80% RH | 57°C/34% RH |
| | 5days | 6days | 13days | 3days | 3days |
| comp.-3 | -8,9 | n.m | n.m. | -10,9 | -16,2 |
| comp.-4 | n.m. | -8,3 | -10,9 | -9,8 | -16,1 |
| II-1 | n.m. | -0,6 | -1,1 | -1,6 | -0,4 |
| II-2 | n.m. | +0,5 | +0,2 | -0,3 | -0,5 |
| II-3 | n.m. | +0,7 | +0,3 | +0,2 | -0,1 |
| II-4 | n.m. | +1,2 | +0,8 | +1,1 | +1,7 |
| II-5 | -4,3 | n.m. | n.m. | -7,5 | -5,5 |

It is clear from table 4 that the samples having an anti-oxidant in their adhesive layer according to the invention show an improved stability compared to the samples without anti-oxidant.

### Dₘᵢₙ increase

For each sample number a relatively fresh sample (maximum 5 days storage in normal conditions) and a sample stored for 3 days at 57°C/34%RH were exposed on a BARCO ELISE high power laserplotter with a power of 4,5W. The density in the recorded areas, which are transparent due to the agglomeration of the bismuth layer into bismuth beads upon laser exposure, was measured with a Macbeth densitometer in the UV region for each sample. Then the difference in minimum density (ΔDₘᵢₙ) between these two samples was determined. This difference ΔDₘᵢₙ gives an idee of the stability of the minimum density after recording during storage of the materials. The results are summarised in table 5.

**TABLE 5**

| | ΔDₘᵢₙ |
|---|---|
| | |
| sample No | |
| comp.-3 | +0,05 |
| comp.-4 | +0,05 |
| II-1 | -0,01 |
| II-2 | 0 |
| II-3 | 0 |
| II-4 | -0,1 |
| II-5 | -0,01 |

It is clear from table 5 that the samples having an anti-oxidant in their adhesive layer according to the invention show no increase in minimum density compared to the sample without anti-oxidant.

### Example III

### - preparation of protective laminates

This was identical to the previous examples. The anti-oxidants used are described in the following table 6.
- A 63 µm PET (layer (4)) was laminated against the pressure sensitive adhesive layer (3).

**TABLE 6**

| sample No. | anti-oxidant | | |
|---|---|---|---|
| | type | amount | |
| | | (%g/g) | g/m² |
| III-1 | 2,5-dimercapto-1,3,4-thiadiazole | 0,4 | 0,02 |
| III-2 | 2,5-dimercapto-l,3,4-thiadiazole | 0,2 | 0,01 |
| III-3 | 2,5-dimercapto-l,3,4-thiadiazole | 0,1 | 0,005 |

### - preparation of the bismuth film samples

see example II

### - results

### Dmax and Dmin change

These were determined as in example II. The results are summarized in table 7

**TABLE 7**

| sample | % ΔD* after storage at | | | ΔDmin** |
|---|---|---|---|---|
| | room temperature 13days | 35°C/80% RH 3days | 57°C/34% RH 3days | |
| III-1 | | -1,7 | -0,5 | -0,02 |
| III-2 | -4,8 | -3,3 | -3 | +0,01 |
| III-3 | -1,1 | -6,2 | -10,2 | +0,01 |

| | | | | |
|---|---|---|---|---|
| *%ΔD<0 means a decrease in density ! | | | | |
| **ΔDₘᵢₙ > 0 means an increase in minimum density on storage. | | | | |

It is clear from table 7 that all the samples show an improved Dmax stability and a lower increase in minimum density on storage compared with samples without anti-oxidant (see comparison comp-3 and comp-4 in table 4 of example II).

### Example IV

### - Preparation of protective laminate

- This was identical to the previous examples. The anti-oxidants used are described in table 8.

**TABLE 8**

| sample No | anti-oxidant | |
|---|---|---|
| | type | amount (g/m² ) |
| comp.-5 | / | / |
| IV-1 | 2,5-dimercapto-1,3,4-thiadiazole | 0,016 |

A 6 µm PET (layer (4)) was, after a corona treatment, laminated against the pressure sensitive adhesive layer (3).

Onto the 6pm PET an antistatic layer was coated containing following ingredients:
- antistatic complex polyethylenedioxythiophene/polystyrene sulphonic acid (15mg/m²);
- a copolyester as binder (200mg/m²)
- wetting agents (6mg/m²)
- a roughening agent in the form of crosslinked polymethylmethacrylate beads having an average particle size of 1,5µm (5mg/m²).

### - preparation of the bismuth film samples

see example II

### - results

### Dmax change

The stability results were expressed as percentual change in maximum density Dmax (%ΔD) after conservation as described in the table 9 beneath.

**TABLE 9**

| sample No. | % ΔD after storing | | |
|---|---|---|---|
| | 7days RT | 3days 35°C/80% RH+ 4days RT | 3days 57°C/34% RH. + 4days RT |
| comp.-5 | -8,1 | -8,0 | -11,2 |
| IV-1 | -1,4 | -2,0 | -2,8 |

It is clear from table 9 that all the samples according to the invention shows an improved Dmax stability in comparison with the samples without anti-oxidant (sample comp-5).

## Claims

1. A heat mode recording element comprising, in order,
(1) a transparent support,
(2) a thin metal recording layer,
(3) an adhesive layer containing one or more adhesive polymers,
(4) a polymeric resin layer,
characterized in that said adhesive layer (3) contains an anti-oxidant.

2. A heat mode recording element according to claim 1 wherein said anti-oxidant is L-ascorbic acid or a derivative thereof.

3. A heat mode recording element according to claim 2 wherein said derivative of L-ascorbic acid is ascorbylpalmitate having following formula :

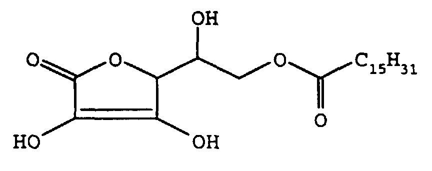

4. A heat mode recording element according to claim 2 wherein said derivative of L-ascorbic acid is 5,6-isopropylidene-L-ascorbic acid having following formula :

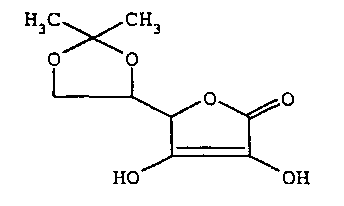

5. A heat mode recording element according to claim 1 wherein said anti-oxidant is 2,5-dimercapto-1,3,4,thiadiazole or a derivative thereof according to following general formula (a) : 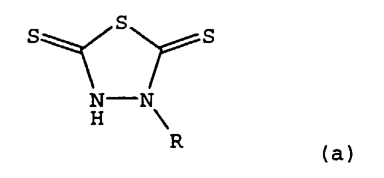 wherein R represents hydrogen, unsubstituted or substituted alkyl, or unsubstituted or substituted aryl.

6. A heat mode recording element according to claim 5 wherein said anti-oxidant is 2,5-dimercapto-1,3,4,thiadiazole.

7. A heat mode recording element according to any of claims 1 to 4 wherein the amount of said anti-oxidant is comprised between 0.005 g/m² and 0.4 g/m².

8. A heat mode recording element according to any of claims 1 to 5 wherein said thin metal layer is a bismuth layer.

9. A heat mode recording element according to claim 8 wherein said bismuth layer has been applied by evaporation in vacuo.

10. A heat mode recording element according to any of claims 1 to 9 wherein said element further comprises one or two antistatic layer(s), optionally comprising matting agents, underneath layer (1), or on top of layer (4), or on both positions.

11. A method for the formation of a heat mode image comprising exposing information-wise to intense laser radiation a heat mode recording element according to any of the previous claims.

12. A method according to claim 9 wherein said intense laser radiation is produced by an infra-red laser.
